# EUROPEAN PATENT APPLICATION

(11) **EP 4 456 039 A1**
(43) Date of publication of application: **30.10.2024**
(21) Application number: 23169875.4
(22) Date of filing: 25.04.2023
(51) Int. Cl.: G08G 1/16, G08G 1/0969, B60W 50/14

(54) **METHOD FOR DETECTING POTENTIAL-ONLY-ACKNOWLEDGE SITUATIONS IN TO INTERSECTION AREA IN ROAD TRAFFIC AND VEHICLE**

(71) Applicant: VOLKSWAGEN AG, 38440 Wolfsburg (DE)
(72) Inventor: Puller, Niklas, 38106 Braunschweig (DE); Hartog, Johannes, 38547 Calberlah (DE); Hoyer, Magnus, 31234 Edemissen (DE); Eckart, Jannes, 38118 Braunschweig (DE)

(57) **Abstract**

The invention relates to a method for detecting potentially dangerous situations in an intersection area in road traffic, wherein a vehicle (10) communicates with further road users (14) by means of Car2X communication (12) and/or wherein the vehicle (10) communicates with at least part of an infrastructure (16) of the road traffic by means of Car2X communication (12), wherein information about status data of the vehicle (10) and information about status data of the further road users (14) is transmitted in the Car2-X communication (12) and wherein the status data is linked with navigation data, in particular with coordinates, in such a way that a prediction of a future route (18) of the vehicle (10) and of the further road users (14) is made possible.

In a method in which early detection of a potentially dangerous situation is enabled so that the risk of an accident with an unprotected road user is minimised, it is intended that it is determined whether the future travel path (18) of the vehicle (10) intersects with a future travel path (18) of at least one further road user (14) and that the driver of the vehicle (10) is signaled when it has been determined that the future travel path (18) of the vehicle (10) intersects with a future travel path (18) of at least one further road user (14).

## Description

The invention relates to a method for detecting potentially dangerous situations in an intersection area in road traffic, wherein a vehicle communicates with further road users by means of Car2X communication and/or wherein the vehicle communicates with at least part of a road traffic infrastructure by means of Car2X communication, wherein in the Car2-X communication information about status data of the vehicle and information about status data of the other road users are transmitted and wherein the status data are linked with navigation data, in particular with coordinates, in such a way that a prediction of a future route of the vehicle and of the other road users is made possible.

In addition, the invention relates to a vehicle, in particular a motor vehicle, with an evaluation unit and with a display device with at least one display area.

Despite progress in vehicle safety, the number of accidents between cars and vulnerable road users is stagnating. Especially for cyclists and motorcyclists, intersections and junctions represent an accident black spot. In order to avoid accidents with unprotected road users, state-of-the-art systems are known which warn of collisions between a vehicle and an unprotected road user in critical situations or intervene in the vehicle dynamics, for example by intervening in the brakes. These systems use various sensors installed on the vehicle, such as ultrasonic sensors, radars, lidars or cameras.

The systems known from the state of the art, which exclusively use sensors installed on the vehicle, suffer from the restriction that a line of sight to the relevant road user must be available, regardless of whether camera, ultrasonic or other sensors are used.

Radar or lidar sensors can be used. In situations where an unprotected road user has been obscured by an object, for example a building or greenery, before entering the path of the car, conventional systems can often no longer react in time and a collision with often serious consequences is unavoidable. Also, the systems known from the state of the art are often designed in such a way that a warning is given at the latest possible time in order to keep the number of false activations low.

The invention is now based on the task of specifying a method for detecting potentially dangerous situations in an intersection area in road traffic as well as a vehicle in which early detection of a potentially dangerous situation is made possible so that the risk of an accident with an unprotected road user is minimised.

In the present invention, this task is firstly solved by the features of the identification part of patent claim 1 in that it is determined whether the path of travel of the vehicle intersects with a path of travel of at least one further road user and in that the driver of the vehicle is signaled when it has been determined that the path of travel of the vehicle intersects with a path of travel of at least one further road user.

Car2X data is a technology in which vehicles communicate with their environment, i.e. "X". In a special Car2Car variant of the Car2X system, vehicles can also communicate with each other. With Car2X, transmission is possible in both directions. Consequently, the vehicle can communicate with the environment and/or the environment with the vehicle. Preferably, sensor data is transmitted during communication. It is conceivable that the Car2X communication is realised via a WLAN connection. In addition to WLANp (IEEE 802.11p), other technologies, e.g. C-V2X (LTE-V2X, 5G-V2X) or backend communication are also conceivable.

Examples are the CAM (Cooperative Awareness Message), or DENM (Decentralised Environmental Notification Message), and/or Plus VAM (Vulnerable Road User Awareness Message) und CPM (Collective Perception Message) of the ETSI standard for Car2X communication. Vehicles can communicate with other vehicles via Car2X communication. By communicating with each other, vehicles can communicate their positions with each other. By linking with an environmental sensor system, for example, the position of the vehicle can be determined more clearly. In addition, the vehicle can communicate with the infrastructure via Car2X communication.

The infrastructure can be traffic lights or, for example, cameras used to monitor road traffic.

An intersection is a section of road traffic where at least two roadways cross. This can refer to roadways used by motor vehicles as well as roadways used by other road users, such as cyclists or pedestrians. A crossing area can therefore also be a straight road with a pedestrian crossing or a cycle path that crosses the road.

The status data can be various data of the vehicle or the other vehicles. In particular, states are physical properties that the vehicle has at a certain moment. These include, for example, the speed, the direction of travel, the acceleration and comparable values, and/or preferably the relative position of the vehicle. The navigation data can preferably be provided by means of GNSS, or for example GPS, but also by means of positioning sensors.

Prediction is a prediction of the future route of the vehicle. The future route can be predicted on the basis of various criteria. In particular, however, the navigation data, which provide information about the condition of the road network, are linked to the status data of the vehicle or the other vehicles, so that the reaching of certain points can be represented by means of time-dependent coordinates. The prediction of the route can be calculated probabilistically or discretely.

Other road users are in particular those road users who are in the vicinity of the vehicle. These are vehicles moving in the statutory direction of travel in the lane occupied by the vehicle. However, it is also conceivable that other vehicles are part of the oncoming traffic, for example. Other road users can also be cyclists or pedestrians.

The travel distance is the future distance to be covered by the vehicle or other road users, especially on a road. The longitudinal movement on the road is taken into account, but also the lateral movement of the vehicle on the road. Consequently, the distance travelled is not only to be understood as the distance travelled on a road, for example, but also the lateral movement, i.e. the position of the vehicle in relation to the entire width of the road or the width of the road. In construction sites, for example, there are often narrowed lanes, so that driving is only possible in a certain area of the entire theoretically available width of the lane.

By checking whether a route crosses another route, it is possible to anticipate whether a potentially dangerous situation could arise. Signaling to the driver ensures that he can react in good time to avert the potentially dangerous situation.

Further preferred embodiments of the invention result from the additional features mentioned in the dependent claims.

In a first embodiment of the method according to the invention, it is provided that the driver of the vehicle is signaled when the travel path of the vehicle crosses a travel path of an unprotected other road user. An unprotected road user may, for example, include vehicles with no more than two wheels, such as bicycles or motorbikes. These vehicles generally do not contain a driver's cab. Cyclists and motorcyclists, respectively, therefore have a particularly high risk of injury should an accident occur. Accordingly, pedestrians are also to be classified as unprotected road users. A separate warning of a possible collision with an unprotected road user is necessary to ensure the safety of unprotected road users.

Signaling can take place acoustically and/or visually, for example. It is conceivable, for example, that a light element is arranged in the vehicle which can light up in different areas. In this context, it is conceivable that the light element is arranged in the area of the windscreen and lights up in at least three areas. Preferably, the light element can light up in the left-hand area, in the middle area and in the right-hand area of the windscreen. Depending on the direction from which the other road user approaches whose path of travel crosses the path of travel of the vehicle, one of the corresponding areas can light up to signal to the driver of the vehicle from which direction a potentially dangerous situation arises.

In a further advantageous embodiment of the method according to the invention, it is provided that the vehicle comprises a display device with at least one display area and that the position of the vehicle's own vehicle and that of the other road user whose route will intersect with the route of the vehicle are displayed on a virtual map in the display area. The display area of the display device can be a display in the centre area or in the cockpit area, for example in the instrument cluster of the vehicle.

Alternatively or additionally, the display area of the display device can be designed as a head-up display. Head-up display means a display area in which the driver can maintain his head position or viewing direction because the information is projected into his field of vision, for example onto the windscreen of the vehicle. In this way, the driver of the vehicle is visually warned that the predicted future path of travel will intersect with the future path of travel of another road user, in particular an unprotected road user, unless appropriate action is taken to prevent this.

In a further embodiment of the method according to the invention, it can be provided that the position of the other road user is displayed by means of a virtual element if the position of the other road user is outside the virtual map displayed in the display area. It can be provided that the virtual element has an orientation feature and that the orientation feature points in the direction of the other road user in which the area that can no longer be displayed in the display area of the display device lies. The orientation feature can mean, for example, an arrowhead of a directional arrow.

Furthermore, in a further embodiment of the method according to the invention, it can be provided that the other road user with whose route the vehicle's route intersects is highlighted in the display area of the display device. Highlighting draws the attention of the driver of the vehicle to the object whose future travel path will intersect with the vehicle. If the vehicle and the other road user are virtually displayed in the display area of the display device in the same way as their actual position, the driver of the vehicle can estimate from which direction the other road user will cross the path of the vehicle and can react accordingly to avoid a collision.

In addition or alternatively, in a further embodiment of the method according to the invention, it can be provided that the other road user whose path of travel intersects the path of travel of the vehicle is coloured with a signal colour in the display area of the display device. The signal colour makes it easier to recognise the other road user. A signal colour can be a colour that stands out from the rest of the virtual display. If comparatively dark colours are used for the representation, a significantly lighter colour can be used for the colouring of the other road user. For example, the use of neon colours would be conceivable.

Furthermore, in a preferred embodiment of the method according to the invention, it can be provided that the further road user with whose route the vehicle's route intersects is enlarged in the display area of the display device. The enlargement can be carried out in addition to or as an alternative to colouring in order to further improve the signaling for the driver of the vehicle.

Furthermore, in another embodiment of the invention, it may be provided that the texture with which the other road user is displayed in the display area of the display device is changed. A change in the texture causes the driver's attention to be drawn to the changing element. The texture can be changed in parallel with the colouring or enlargement.

In a further embodiment of the method according to the invention, it is provided that the other road user whose path of travel intersects the path of travel of the vehicle is shown flashing or pulsating in the display area of the display device. Analogous to the previous highlighting, pulsing or flashing also ensures that the other road user can be better perceived by the driver, so that a dangerous situation can be recognised in good time.

In order not to create unnecessary warnings, a further embodiment of the method according to the invention provides that the driver of the vehicle is signaled when it has been determined that the travel path of the vehicle no longer intersects with a travel path of at least one other road user. The signaling may also be carried out by omitting the previously carried out signaling. If there is no warning, the driver of the vehicle can assume that the situation has been defused by appropriate measures so that a collision with the other road user no longer needs to be feared.

In a further embodiment of the invention, it can be provided that the driver of the vehicle is signaled when the vehicle leaves the intersection area. If the vehicle is in a lane leading away from the intersection area, it can be assumed that the hazardous situation no longer exists. A crossing of the lanes of the vehicle and another road user is then no longer to be feared. This can be actively signaled to the driver of the vehicle. However, it is also conceivable that by ending the aforementioned highlighting and signaling, it is suggested to the driver that a hazardous situation no longer exists.

The aforementioned task is also solved by a vehicle, in particular a motor vehicle, with an evaluation unit and with a display device with at least one display area. It is provided that a method according to the invention can be carried out by the evaluation unit. The above explanations concerning the method according to the invention also apply accordingly to the vehicle according to the invention.

Electronic or electrical devices and/or other relevant devices or components according to embodiments of the present invention described herein may be implemented using any suitable hardware, firmware (e.g., an application-specific integrated circuit), software, or a combination of software, firmware, and hardware. For example, the various components of these devices may be located on an integrated circuit (IC) or on separate IC chips. Further, the various components of these devices may be implemented on a flexible printed circuit film, a tape carrier package (TCP), a printed circuit board (PCB), or on a single substrate. In addition, the various components of these devices may be a process or thread running on one or more processors in one or more computing devices, executing computer program instructions and interacting with other system components to perform the various functions described herein. The computer program instructions are stored in memory that may be implemented in a computing device using standard memory, such as random access memory (RAM). The computer program instructions may also be stored in other non-transferable computer-readable media, such as a CD-ROM, flash drive or the like. A person skilled in the art should also recognise that the functionality of different computing devices may be combined or integrated into a single computing device, or that the functionality of a particular computing device may be distributed to one or more other computing devices, without departing from the scope of the exemplary embodiments of the present invention.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings. It shows:
- Fig. 1: a schematic representation of the implementation of a method for detecting potentially dangerous situations in an intersection area in road traffic in a vehicle,
- Fig. 2: a schematic representation of a display area of a display device during the implementation of an example of a method for detecting potentially dangerous situations in an intersection area in road traffic in a vehicle and
- Fig. 3: a block representation of various steps of a method for detecting potentially dangerous situations in an intersection area in road traffic.

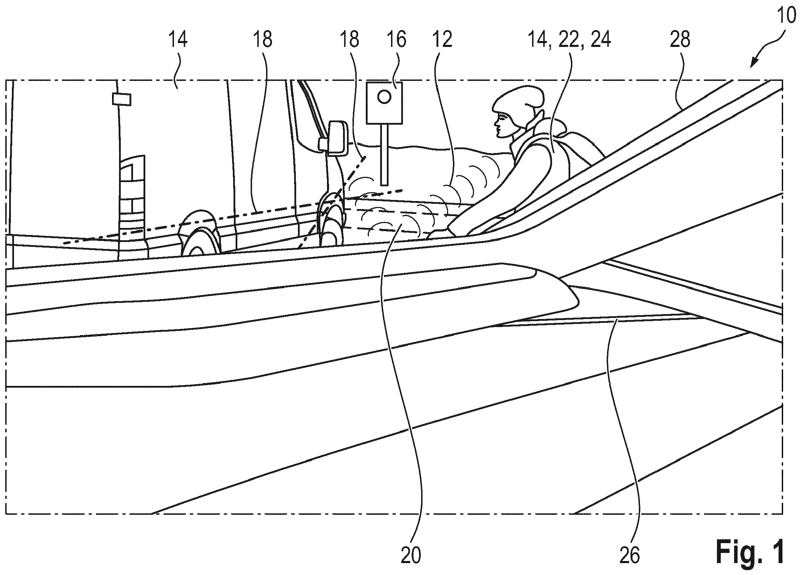

Fig. 1 shows the implementation of a method for detecting potentially dangerous situations in an intersection area in road traffic. In this process, a vehicle 10 communicates via Car2X communication 12 with other road users 14 or a part of an infrastructure 16 of the road traffic. In this example, the infrastructure 16 is traffic lights and cameras for monitoring road traffic. It is envisaged that information about status data of the vehicle 10 and information about status data of the other road users 14 are transmitted during the Car2-X communication 12. The status data is linked with navigation data, in particular with coordinates, in such a way that a prediction of a future route 18 of the vehicle 10 and the other vehicles 14 is made possible.

The status data contain information about the position and speed of the vehicle 10 or the other road users 14. By using the information about the position, in the form of coordinates, and the current speed, conclusions can be drawn about the route of the vehicle 10 or the other road users 14 in conjunction with navigation data containing information about the road layout, which makes it possible to predict the future route 18. Furthermore, the status data contain information about the classification of the vehicle 10 or the other road users 14. In the classification, a distinction is made between motor vehicles with at least four wheels and vehicles with at most two wheels. As a rule, vehicles with two wheels or less are motorbikes or bicycles. These vehicles are often classified as unprotected vehicles because they generally do not contain a driver's cab. Cyclists or motorcyclists therefore have a particularly high risk of injury in the event of an accident. Furthermore, another road user 14 also includes a pedestrian, who can be categorised accordingly.

The navigation data contains information about lanes 20. By knowing the lanes 20, in particular in the relevant intersection area, the positions of the vehicle 10 or of other road users 14 can be further specified. Furthermore, the navigation data contains information about pedestrian crossings 22 and bicycle crossings 24. In this way, the most probable routes of unprotected road users can already be taken into account. Thus, the prescribed paths can already be associated with the conditions of unprotected road users. In addition, the condition data contain information about a lane 20 on which the vehicle 10 or the other road users 14 are located. Thus, both the vehicle 10 and the other vehicles 14 can be clearly assigned to a lane 20. This information increases the accuracy of the position determination of the vehicle 10 or the other vehicles 14. In addition, the prediction of the future route 18 can be improved if, for example, it is recognised that a vehicle 10 is in a turning lane.

It is determined whether the future travel path 18 of the vehicle 10 intersects with a future travel path 18 of another road user 14. In this way, it can be recognised in advance whether a potentially dangerous situation could arise. To increase safety, the vehicle 10 is braked if it is detected that the future travel path 18 of the vehicle 10 intersects with a future travel path 18 of at least one other road user 14. An intervention, for example by driving assistance systems installed in the vehicle 10 or the other road user 14, may be necessary if it is recognised that the future travel paths 18 will already cross in the near future. If it can be assumed that the driver of the vehicle 10 can no longer react in time, appropriate measures can be initiated by which the vehicle 10 automatically reduces its speed in order to prevent a crossing of the future traffic lanes 18.

The driver of the vehicle 10 is signaled when it has been determined that the path of travel 18 of the vehicle 10 intersects with a path of travel 18 of at least one other road user 14. Signaling can, for example, take place acoustically and/or visually and/or haptically. In the present embodiment example, it is provided that a light element 26 is arranged in the vehicle 10, which can light up in different areas. The light element 26 is arranged in the area of the windscreen 28. The light element 26 can light up in three areas. The light element 26 can light up in the left-hand area, in the centre area and in the right-hand area of the windscreen 28. Depending on the direction from which the further road user 14 approaches, whose travel path 18 crosses the travel path 18 of the vehicle 10, a corresponding area lights up. In the present embodiment example, a cyclist crosses the path 18 of the vehicle 10 from the right. Therefore, the light element 26 lights up on the right side of the windscreen 28.

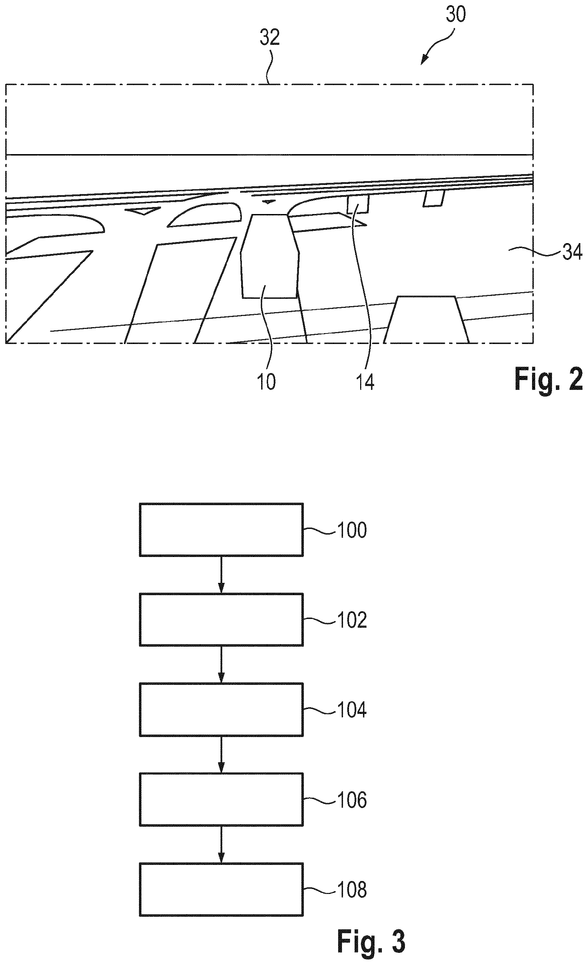

Figure 2 shows a display area 30 of a display device 32. In the display area 30, the position of the driver's own vehicle 10 and that of the other road user 14 whose route 18 will intersect with the route 18 of the vehicle 10 is displayed on a virtual map 34. The display area 30 of the display device can be a display in the centre area or in the cockpit area, for example in the instrument cluster of the vehicle 10.

Furthermore, in a further embodiment of the method according to the invention, it can be provided that the other road user with whose route the vehicle's route intersects is highlighted in the display area of the display device. Highlighting draws the attention of the driver of the vehicle to the object whose future travel path will intersect with the vehicle. If the vehicle and the other road user are virtually displayed in the display area of the display device in the same way as their actual position, the driver of the vehicle can estimate from which direction the other road user will cross the path of the vehicle and can react accordingly to avoid a collision.

The other road user 14, with whose route 18 the route 18 of the vehicle 10 intersects, is coloured with a signal colour in the display area 30 of the display device 32. The signal colour makes it easier to recognise the other road user 14. A signal colour can be a colour that stands out from the rest of the virtual display. If comparatively dark colours are used for the representation, a significantly lighter colour can be used for the colouring of the additional road user 14. For example, the use of neon colours would be conceivable.

Furthermore, the other road user 14, with whose route 18 the route 18 of the vehicle 10 intersects, is shown flashing in the display area 30 of the display device 32. Analogous to the previous highlighting, flashing also ensures that the other road user 14 can be better perceived by the driver so that a dangerous situation can be recognised in good time.

Figure 3 shows a schematic block diagram of different steps of a procedure for the detection of potentially dangerous situations in an intersection area in road traffic. In a first step 100 Car2X data are processed and a decision is made as to whether a potential intersection of vehicle and unprotected road user path takes place. Triggering criteria here can be a purely geometric overlap of the paths (paths cross), a geometric and temporal overlap (paths cross at approximately the same time) or certain overlap probabilities (paths cross with a defined probability at the same time).

If such a situation is detected, the driver will be alerted to the potential danger as early as possible in step 102. This warning is displayed in the display area 30 of the display unit 32, which shows the position of the driver's own vehicle 10 and that of the crossing objects on the virtual map 34.

The driver is informed at a time when the load caused by the driving task at the intersection is still low. The situation should be defused by an early reaction to the warning, for example by reducing the speed in time so that a further warning is no longer necessary.

For this purpose, a 3D view is displayed in step 104 when approaching an intersection that is relevant for the system. In this context, relevant means that assistance is possible at this intersection and that the risk of an accident is considered high. The 3D view shows the driver's own vehicle 10 and a simplified map of the surroundings. Furthermore, objects relevant to the situation, for example pedestrians and/or cyclists, are shown stylised. Objects that are not relevant to the situation, for example cars at a pedestrian crossing, are not shown in order to reduce the display to the essential elements. The display is chosen in such a way that the potentially relevant objects, e.g. cyclists, which are not yet to be warned about, can be recognised but do not immediately attract attention, e.g. greyed out or translucent.

If a potentially dangerous situation is identified on the basis of the preceding steps and the necessary initial conditions are fulfilled, the relevant object(s) is/are highlighted in the 3D view in step 106, for example by colouring in a warning colour, by enlarging the object, changing the texture or translucency. Pulsing or flashing of the object is also conceivable. In addition, a warning is displayed in the display area. In a higher warning level, a new modification of the colour/size etc. of the object is carried out in step 108. In addition, an acoustic warning can be given.

The system remains operational until the danger zone of the intersection is left. When leaving, the system changes in step 108 to a state that continues to display the relevant objects but can no longer generate further warning levels.

### Reference signs

- 10: vehicle
- 12: Car2X communication
- 14: more vehicles
- 16: infrastructure
- 18: future route
- 20: lane
- 22: pedestrian crossing
- 24: cycle crossing
- 26: light element
- 28: windscreen
- 30: display range
- 32: display device
- 34: virtual map

- 100-108: different steps of the procedure

## Claims

1. Method for detecting potentially dangerous situations in an intersection area in road traffic,
wherein a vehicle (10) communicates with further road users (14) by means of Car2X communication (12) and/or wherein the vehicle (10) communicates with at least part of a road traffic infrastructure (16) by means of Car2X communication (12),
wherein information about status data of the vehicle (10) and information about status data of the other road users (14) is transmitted in the Car2-X communication (12) and wherein the status data is linked with navigation data, in particular with coordinates, in such a way that a prediction of a future route (18) of the vehicle (10) and of the other road users (14) is made possible,
**characterised in that**
it is determined whether the future travel path (18) of the vehicle (10) intersects with a future travel path (18) of at least one further road user (14) and **in that** it is signaled to the driver of the vehicle (10) if it has been determined that the future travel path (18) of the vehicle (10) intersects with a future travel path (18) of at least one further road user (14).

2. Method according to claim 1, **characterised in that** the driver of the vehicle (10) is signaled when the future travel path (18) of the vehicle (10) intersects with a future travel path (18) of an unprotected further road user (14).

3. Method according to claim 1 or 2, **characterized in that** the vehicle (10) comprises a display device (32) with at least one display area (30), and **in that** the position of the vehicle's own vehicle (10) and that of the other road user (14) whose future route (18) will intersect with the future route (18) of the vehicle (10) are displayed on a virtual map (34) in the display area (30).

4. Method according to claim 3, **characterised in that** the position of the further road user (14) is displayed by means of a virtual element if the position of the further road user (14) is outside the virtual map (34) displayed in the display area (30).

5. Method according to claim 3 or 4, **characterised in that** the further road user (14) with whose future travel path (18) the future travel path (18) of the vehicle (10) intersects is highlighted in the display area (30) of the display device (32).

6. Method according to claim 5, **characterised in that** the further road user (14) with whose future route (18) the future route (18) of the vehicle (10) intersects is coloured with a signal colour in the display area (30) of the display device (32).

7. Method according to claim 5 or 6, **characterised in that** the further road user (14) with whose future travel path (18) the future travel path (18) of the vehicle (10) intersects is enlarged in the display area (30) of the display device (32).

8. Method according to one of the claims 5 to 7, **characterised in that** the texture with which the further road user (14) is represented in the display area (30) of the display device (32) is changed.

9. Method according to one of the claims 5 to 8, **characterised in that** the further road user (14) with whose future route (18) the future route (18) of the vehicle (10) intersects is shown flashing or pulsating in the display area (30) of the display device (32).

10. A method according to any one of claims 1 to 9, **characterised in that** the driver of the vehicle (10) is signaled when it has been determined that the future path (18) of the vehicle (10) no longer intersects with a future path (18) of at least one other road user (14).

11. Method according to one of claims 1 to 9, **characterised in that** the driver of the vehicle (10) is signaled when the vehicle (10) leaves the intersection area.

12. Vehicle (10), in particular motor vehicle, having an evaluation unit and having a display device (32) with at least one display area (30), **characterized in that** a method according to one of claims 1 to 11 can be carried out by the evaluation unit.
